# EUROPÄISCHE PATENTSCHRIFT

(11) **EP 2 992 760 B1**
(45) Veröffentlichungstag und Bekanntmachung des Hinweises auf die Patenterteilung: **22.09.2021**
(21) Anmeldenummer: 15176381.0
(22) Anmeldetag: 13.07.2015
(51) Int. Cl.: A21B 3/04, F24C 7/08, F24C 15/20

(54) **BACKOFEN UND BACKVERFAHREN MIT OPTIMIERTEM BACKRAUMDRUCK**
BAKING OVEN AND BAKING METHOD WITH OPTIMIZED BAKING AREA PRESSURE
FOUR DE CUISSON ET PROCÉDÉ DE CUISSON AVEC PRESSION OPTIMISÉE DE L'ESPACE DE CUISSON

(30) Priorität: 23.07.2014 DE 102014110376
(43) Veröffentlichungstag der Anmeldung: 09.03.2016
(73) Patentinhaber: MIWE Michael Wenz GmbH, 97450 Arnstein (DE)
(72) Erfinder: Koos, Michael, 97450 Heugrumbach (DE); Pfeuffer, Bernd, 97776 Obersfeld (DE); Späth, Hermann, 94333 Geiselhöring (DE)
(74) Vertreter: Freischem & Partner Patentanwälte mbB

(56) Entgegenhaltungen:
- WO-A2-2009/043779
- DE-U1-202011 051 026
- None

## Beschreibung

Die Erfindung betrifft einen Backofen mit einem Backraum, welcher mit einer zu einem Kamin führenden Austrittsöffnung versehen ist, durch die Luft aus dem Backraum entweichen kann, und welcher eine Frischluftöffnung mit motorisch verstellbarem Strömungsquerschnitt zwischen dem Backraum und der Umgebung aufweist.

Moderne Backöfen besitzen einen Schwadenabgang, der von einer mit einem Kamin verbundenen Austrittsöffnung gebildet wird und durch den Dampf, welcher dem Backraum zugeführt wird, sowie der Ausbackverlust zu einem Kamin geleitet wird. Der Ausbackverlust ist der Gewichtsanteil, der bei dem Backvorgang aus den gebackenen Teiglingen entweicht, und besteht vorwiegend aus Wasser. Der Kamin hat in der Regel einen bauartbedingten und temperaturbedingten Zug, das heißt, es entsteht in dem Kamin ein Unterdruck, der dafür sorgt, dass die Dämpfe und Gase in dem Kamin von unten nach oben gesogen werden. Der Kaminzug beeinflusst den Druck der Backatmosphäre in dem Backraum des Backofens. Ein Kamin mit einem starken Zug erzeugt einen erheblichen Unterdruck in dem Backraum. Hat der Kamin dagegen nur einen schwachen Zug, so entsteht ein relativ kleiner Unterdruck in der Größenordnung von etwa 5 Pa. Der Zug des Kamins ist auch wetterabhängig Bei kaltem Wetter entsteht aufgrund der großen Temperaturunterschiede in der Regel ein starker Zug und dadurch ein starker Unterdruck im Backraum.

Die Druckverhältnisse in dem Backraum haben einen erheblichen Einfluss auf die Qualität des Backergebnisses. Ein geringerer Druck in dem Backraum kann beispielsweise zu einem reduzierten Wärmeübergang auf die in dem Backraum eingebrachten Teiglinge führen. Das hat zur Folge, dass die Backzeit verlängert werden muss, um das gewünschte Backergebnis, das heißt die gewünschte Bräunung und Rösche der beim Backen entstehenden Kruste zu erreichen. Die erhöhte Backdauer reduziert die Produktivität des Backofens und steigert den Energieverbrauch, der zur Erzielung eines bestimmten Backergebnisses erforderlich ist. Der sich durch die Witterung verändernde Zug muss aufgrund der Erfahrung des Bäckers durch eine Verlängerung der Backzeit ausgeglichen werden.

Während des Backens werden die Teiglinge in der Regel mit Dampf beaufschlagt. Diese sogenannte Schwadenzufuhr steigert die Wärmeübertragung und sorgt für eine erwünschte Konsistenz der Oberfläche der Backwaren. Auch die Zufuhr des Backschwadens hat einen Einfluss auf die Druckverhältnisse innerhalb des Backraums.

Die Frischluftöffnung wird bei herkömmlichen Backöfen einige Minuten vor Beendigung des Backprozesses geöffnet. Je nach Backware ist auch ein frühzeitiges Öffnen der Frischluftöffnung erforderlich, um das gewünschte Backergebnis zu erzielen. Beispielsweise wird bei Laugenbrezeln die Frischluftöffnung frühzeitig geöffnet. Das Backen bei geöffneter Frischluftöffnung hat den Nachteil, dass kalte Luft der Backatmosphäre beigemischt wird.

Eine Vorrichtung zur Wärmebehandlung von Lebensmitteln ist aus der Druckschrift DE 102 45 773 C1 bekannt. Hier ist ein Umschaltventil vorgesehen, welches in einer Bypassstellung die Garraumabluftöffnung mit der Garraumzuluftöffnung verbindet und in einer Durchluftstellung Zuluft aus der Gerätezuluftöffnung in den Garraum führt und Abluft über die Geräteabluftöffnung aus der Geräteabluftöffnung herausführt. Eine Regelung des Garraumdrucks ist hier nicht angesprochen. Lediglich der Überdruck an der Garraumabluftöffnung wird durch ein Rückschlagventil begrenzt, welches ab einer bestimmten Druckdifferenz von über 50 mbar öffnet.

Die Druckschriften DE 10 2008 012 395 A1 und WO 2009/043779 A3 zeigen eine Vorrichtung zur Regelung der Druckdifferenz des Drucks vor und hinter einer Drosselklappe, die in der Austrittsöffnung angeordnet ist. Die Regelung des Backraumdrucks ist auch hier nicht angesprochen.

Die Druckschrift DE 20 2011 051 026 U1 beschreibt ein Gargerät mit einem Garraum, welches eine erste und eine zweite Öffnung zum Garraum aufweist, wobei die erste Öffnung ein erstes Absperrmittel und die zweite Öffnung ein zweites Absperrmittel aufweist. Die Absperrmittel werden unter anderem verwendet, um einen schnellen Abbau eines Überdrucks im Garraum zu ermöglichen.

Aufgabe der Erfindung ist es, die Druckverhältnisse innerhalb des Backraumes während des gesamten Backvorgangs optimal einzustellen.

Diese Aufgabe wird erfindungsgemäß dadurch gelöst, dass ein Drucksensor den Druck in dem Backraum misst, wobei der Drucksensor ein Differenzdrucksensor ist, der den Druckunterschied zwischen dem Backraumdruck und dem Umgebungsdruck misst. Der Drucksensor leitet die Messsignale an eine Steuereinheit, welche den verstellbaren Strömungsquerschnitt der Frischluftöffnung aufgrund der Messsignale des Drucksensors steuert, wobei die Steuereinheit dazu eingerichtet ist, den Öffnungsgrad des Strömungsquerschnitts der Frischluftöffnung derart zu steuern, dass in dem Backraum während des Backvorgangs Umgebungsdruck herrscht und gehalten wird.

Mit anderen Worten wird vorgeschlagen, während des Backvorgangs den Druck innerhalb des Backraumes zu messen und über eine Steuereinheit den verstellbaren Strömungsquerschnitt so zu regeln, dass innerhalb des Backraums ein gewünschter Druck entsteht. In aller Regel wird bevorzugt, innerhalb des Backraums den Umgebungsdruck einzustellen. Das Ziel ist das sogenannte "atmosphärische Backen" oder Backen bei Atmosphärendruck. Die Teiglinge werden dem Backraum bei Umgebungsdruck (atmosphärischem Druck) zugeführt. Bei den bisherigen Backöfen entstand während des Backvorgangs ein Unterdruck, der dazu führte, dass die in dem Teigling eingeschlossenen Gasblasen einen geringeren Druck als den atmosphärischen Druck aufwiesen. Bei der Entnahme der fertigen Backwaren aus dem Backraum wurden sie wieder mit dem höheren Atmosphärendruck beaufschlagt, wodurch die in den Backwaren eingeschlossenen Gase komprimiert wurden und die Teiglinge schrumpften. Nach dem oben beschriebenen Verfahren ist es nun möglich, Druckschwankungen weitgehend zu reduzieren. Die Steuerung steuert dabei den Druck innerhalb des Backraums auf der Grundlage des Messsignals des Drucksensors. So entsteht ein geschlossener Regelkreislauf. Mit diesem Regelkreislauf kann der Backraumdruck auf einem vorgegebenen Wert, nämlich auf Umgebungsdruck, gehalten werden. In den bei Umgebungsdruck gebackenen Teiglingen herrscht während des Backvorgangs ein dem Atmosphärendruck entsprechender Innendruck. Die Schrumpfung aufgrund des Druckausgleichs nach der Entnahme aus dem Backofen entfällt folglich. Insbesondere Plunder, also locker aufgehende Backwaren, erhalten ein größeres Volumen und haben eine verbesserte Konsistenz.

Der Drucksensor ist ein Differenzdrucksensor, der den Druckunterschied zwischen dem Backraumdruck und dem Umgebungsdruck misst. Ein Differenzdrucksensor weist in der Regel zwei Messkammern auf, zwischen denen eine Membran angeordnet ist. Die Auslenkung der Membran ist ein Maß für den Druckunterschied zwischen beiden Kammern. Die erste Kammer wird mit Backraumdruck beaufschlagt. Die zweite Kammer wird mit Umgebungsdruck beaufschlagt. Wenn mit der hier beschriebenen Vorrichtung bei Umgebungsdruck gebacken wird, ist die Steuereinheit so einzustellen, dass ein gemessener Differenzdruck von 0 erreicht wird.

Im Vergleich zu der bisher bekannten ungesteuerten Frischluftöffnung ermöglicht die Steuerung über den gesamten Backvorgang ein sehr viel geringeres Öffnen der Öffnung. Dadurch ist die zuströmende Frischluftmenge weitaus geringer und es kann Energie gespart werden.

Der verstellbare Strömungsquerschnitt für die Frischluftöffnung kann mindestens eine der folgenden Vorrichtungen aufweisen:
- eine auf und zu schwenkbare Frischluftklappe;
- einen Schieber, der den Strömungsquerschnitt öffnet oder schließt.

Eine Frischluftklappe gibt den Strömungsquerschnitt weitgehend frei, wenn sie rechtwinklig zu einem Rohrstutzen, in dem sie angebracht ist, ausgerichtet ist. Ist die Frischluftklappe zugeklappt, wird der Strömungsquerschnitt geschlossen. Ein Schieber kann den Strömungsquerschnitt verschließen, teilweise freigeben und vollständig öffnen. Andere bekannte Vorrichtungen können zum Einstellen des Öffnungsgrades eines Strömungsquerschnittes verwendet werden.

Der Drucksensor selbst kann in der Praxis außerhalb des Backraums angeordnet sein, und eine in dem Backraum mündende Strömungsleitung kann den Drucksensor mit Backraumdruck beaufschlagen. Dies hat den Vorteil, dass der Drucksensor in einer relativ kalten Zone des Backofens angeordnet sein kann. Drucksensoren, die bei einer Backraumtemperatur weit über 200 Grad funktionsfähig sind, sind sehr teuer. Durch die Anordnung des Drucksensors in einer kühlen Zone außerhalb des Backraums wird die Störanfälligkeit der hier beschriebenen Vorrichtung reduziert.

Wie weiter oben erwähnt, kann in der Praxis die Steuereinheit derart einstellbar sein, dass in dem Backraum während des Backvorgangs Umgebungsdruck herrscht, um optimale Backergebnisse zu erzielen. Diese Einstellung kann für den gesamten Backvorgang gewählt werden, wobei allerdings während der Beschwadung, d.h. der Zufuhr heißen Wasserdampfs, keine Frischluft zugeführt wird, um den Backschwaden optimal einwirken zu lassen.

Schließlich kann der Backofen in der Praxis im Bereich oberhalb der Türöffnung frei von einem Dunstfang sein. Bisherige Backöfen hatten grundsätzlich einen Dunstfang, um die feuchte Backatmosphäre aufzufangen, die beim Öffnen der Tür aus dem Backofen heraus trat. Dadurch, dass durch kontinuierliche Zufuhr von Frischluft der Druck in dem Backraum auf Umgebungsdruck gehalten wird, kann beim Öffnen der Tür keinerlei Druckgefälle bestehen, welches die Backatmosphäre durch die Backofentür nach außen treiben könnte. Außerdem entsteht durch die kontinuierliche Frischluftzufuhr eine homogene Backatmosphäre ohne besonders hohe Luftfeuchtigkeit oder Schwadenanteil, so dass der Backofen gefahrlos auch ohne Dunstfang geöffnet werden kann. Mit dem Dunstfang können auch die Verrohrung des Dunstfangs und eine spezielle Belüftung des Raums, in dem sich der Backofen befindet, entfallen. Dadurch ergeben sich erhebliche Einsparungen für den Bäcker.

Die Erfindung betrifft ferner ein Verfahren zum Betrieb eines Backofens mit einem Backraum, welcher mit einer zu einem Kamin führenden Austrittsöffnung versehen ist, durch die Luft aus dem Backraum entweichen kann, und welcher eine Frischluftöffnung mit motorisch verstellbarem Strömungsquerschnitt zwischen dem Backraum und der Umgebung aufweist.

Zur Lösung der oben genannten Aufgabe umfasst das Verfahren folgende Schritte:
- ein Drucksensor, wobei der Drucksensor ein Differenzdrucksensor ist, misst den Druckunterschied zwischen dem Backraumdruck und dem Umgebungsdruck,
- die Messsignale des Drucksensors werden an eine Steuereinheit geleitet,
- die Steuereinheit steuert den Öffnungsgrad des verstellbaren Strömungsquerschnitts aufgrund der Messsignale des Drucksensors und
- die Steuereinheit steuert den Öffnungsgrad derart, dass in dem Backraum während des Backvorgangs Umgebungsdruck herrscht und gehalten wird.

In der Praxis kann der Drucksensor außerhalb des Backraums angeordnet werden und eine in den Backraum mündende Strömungsleitung den Drucksensor mit Backraumdruck beaufschlagen.

Die Steuereinheit kann in der Praxis den Lüftungsgrad derart steuern, dass in dem Backraum während des Backvorgangs Umgebungsdruck herrscht.

Dem Backraum kann in der Praxis durch einen Schwadenapparat Dampf zugeführt werden, wobei während des Beschwadungsvorgangs der Backraumdruck nicht auf Umgebungsdruck eingestellt wird. Durch diese Maßnahme ist sichergestellt, dass der Schwaden bei erhöhtem Druck intensiv auf die in den Backraum eingebrachten Teiglinge einwirkt. Wenn nach der Beschwadung der Backvorgang fortgesetzt wird, was zum Beispiel bei einem mit Umluft arbeitenden Stikkenofen dadurch erkennbar ist, dass das die Backatmosphäre umwälzende Gebläse wieder aktiviert wird, wird der Öffnungsquerschnitt für die Frischluftöffnung wieder so gesteuert, dass in dem Backraum Umgebungsdruck herrscht.

Weitere praktische Ausführungsformen und Vorteile der Erfindung sind nachfolgend im Zusammenhang mit den Zeichnungen beschrieben.
Fig. 1 zeigt eine dreidimensionale Ansicht des hier beschriebenen Backofens.
Fig. 2 zeigt eine Vorderansicht des Backofens aus Fig. 1.
Fig. 3 zeigt eine Draufsicht des Backofens aus Fig. 1.
Fig. 4 zeigt die Einzelheit "A" aus Fig. 2.
Fig. 5 zeigt ein Regelschema des hier beschriebenen Backofens.

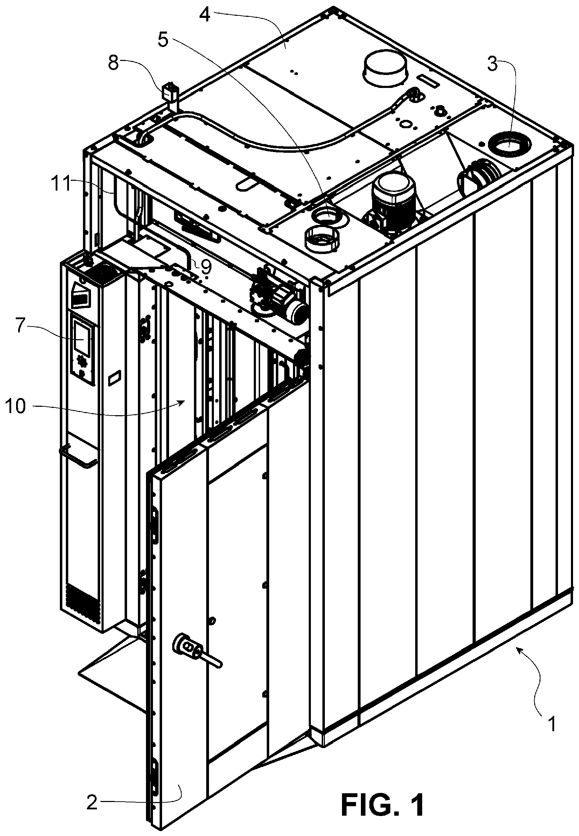

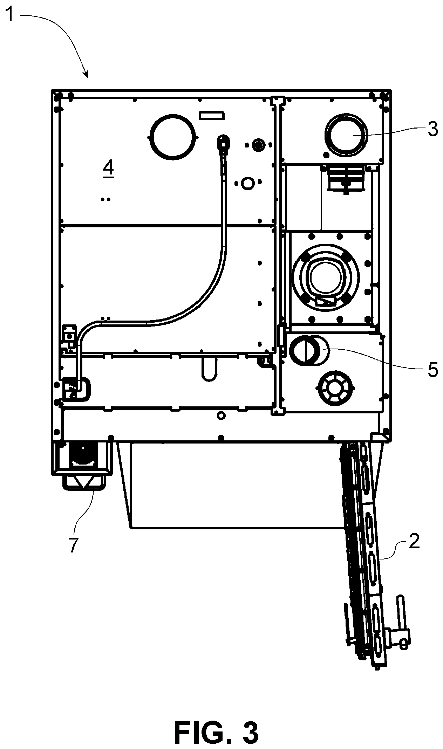

Der in den Fig. 1 bis 3 dargestellte Backofen 1 ist ein Stikkenofen, in den ein Stikkenwagen, auch Backwagen genannt, eingeschoben werden kann. Der Stikkenwagen weist mehrere übereinander angeordnete Backgutträger auf, auf denen jeweils eine Vielzahl von zu backenden Teiglingen angeordnet ist.

Der Backofen 1 weist eine Tür 2 auf, welche den Backraum 10 verschließt. Der Backraum 10 hat bei diesem Backofen 1 eine Höhe von etwa 2 m und eine Breite und Tiefe von jeweils über 1 m. Oberhalb des Backraums 10 ist ein Heizregister und ein Gebläse (beides nicht dargestellt) angeordnet.

Der Backofen 1 weist eine Deckwand 4 auf, in der eine Austrittsöffnung 3 angeordnet ist, die zu dem Kamin (nicht dargestellt) führt. Die Austrittsöffnung 3 bildet den Schwadenabgang und dient auch dem Austritt des Ausbackverlustes, d.h. des Gewichtsanteils der Teiglinge, der während des Backvorgangs aus den Teiglingen austritt. Die Austrittsöffnung 3 ist mit einem Kamin verbunden, durch den auch die Abgase des Brenners des Ofens herausgeführt werden. Der Kamin muss konstruktiv einen Zug entwickeln, das heißt, aufgrund der Temperaturunterschiede entsteht am unteren Ende des Kamins ein Sog oder Unterdruck, der dafür sorgt, dass die Dämpfe und Gase in dem Kamin nach oben abgesogen werden. Der Kaminzug variiert je nach konstruktiver Bauart und nach Temperaturbedingungen. Folglich herrscht an der Austrittsöffnung 3 bei jedem Backofen ein anderer Druck, so dass sich auch in dem Backraum 10 jedes Backofens ein individueller Druck einstellt.

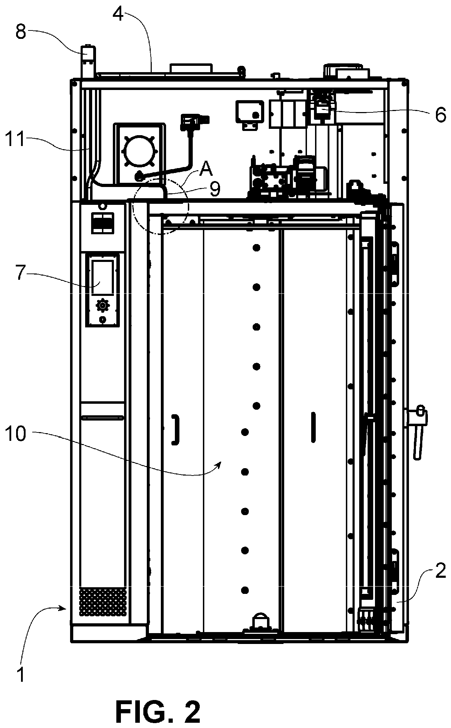

Ferner ist in der oberen Deckwand 4 des Backofens 1 eine Frischluftöffnung 5 zu erkennen. In der Frischluftöffnung 5 ist eine Verschlussvorrichtung (nicht dargestellt) angeordnet. Ein Stellmotor 6 (siehe Fig. 2) verstellt die Verschlussvorrichtung, um den Öffnungsgrad des Strömungsquerschnitts der Frischluftöffnung 5 zwischen den Zuständen "vollständig geöffnet" und "vollständig geschlossen" kontinuierlich einzustellen. Der Stellmotor 6 wird über eine Steuereinheit 7 des Backofens 1 gesteuert.

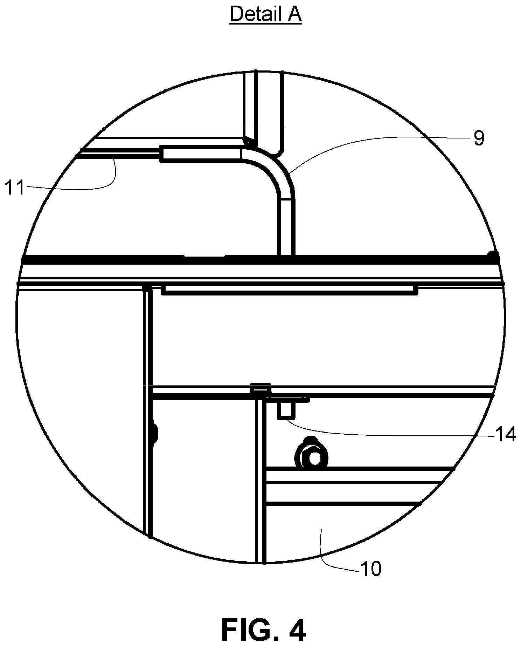

Im mittleren Bereich der Deckwand 4 des Backofens 1 ist ein Drucksensor 8 zu erkennen. Der Drucksensor 8 ist in diesem Fall ein Differenzdrucksensor mit zwei Messkammern. In einer Messkammer herrscht der Umgebungsdruck außerhalb des Backofens 1. Die zweite Messkammer wird mit dem Druck in dem Backraum 10 des Backofens 1 beaufschlagt. Zu diesem Zweck ragt ein abgewinkeltes Röhrchen 9 nahe der Tür in den Backraum 10. Das Röhrchen 9 ist in Fig. 4 vergrößert dargestellt. Das untere Ende 14 des Röhrchens 9 mündet in den Backraum 10. An dem oberen abgewinkelten Ende des Röhrchens 9 ist eine Druckleitung 11 angeordnet, die den Druck des Backraums 10 zum Drucksensor 8 leitet. Da die zu übertragenden Drücke sich nur wenig vom Umgebungsdruck unterscheiden, kann die Druckleitung 11 als Schlauch ausgebildet sein. Der Drucksensor 8 selbst ist außerhalb des Backraums 10 oberhalb der Deckwand 4 in einem Montageraum angeordnet. Hier herrschen sehr viel geringere Temperaturen als im Backraum 10, so dass die Langlebigkeit und Zuverlässigkeit des Drucksensors 8 erheblich erhöht ist. Der Drucksensor 8 ist mit der Steuereinheit 7 mittels Signalleitungen gekoppelt und überträgt die Messsignale an die Steuereinheit 7.

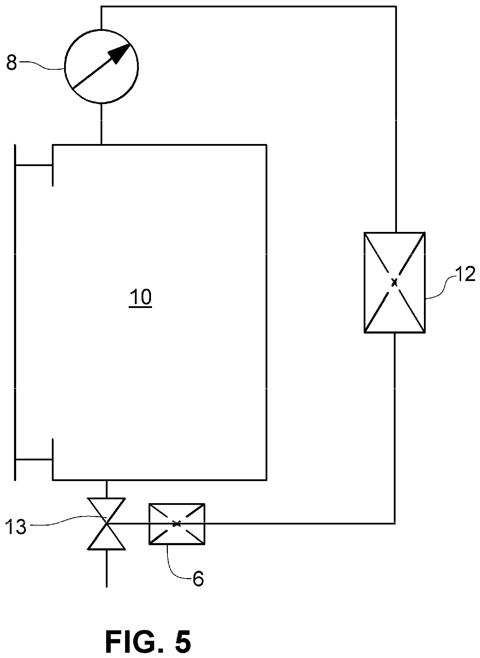

Die Fig. 5 zeigt den Steuerkreis bzw. Regelkreis des hier beschriebenen Backofens. Der Druck innerhalb des Backraums 10 wird als Differenzdruck im Vergleich zu dem außerhalb des Backraums 10 herrschenden Umgebungsdruck durch den Drucksensor 8 gemessen. Ein Regler 12, der Bestandteil der Steuereinheit 7 ist, steuert den Antriebsmotor 6 für eine Verschlussvorrichtung 13 der Frischluftöffnung 5. Die Verschlussvorrichtung 13 ist hier schematisch dargestellt. Sie kann aus einer verschwenkbaren Klappe innerhalb eines Rohrstutzens bestehen oder aus einem Schieber, der unterschiedlich weit in den Rohrstutzen hineingeschoben wird. Beliebige andere mechanische Mittel zur Variation des Strömungsquerschnitts der Frischluftöffnung 5 können Verwendung finden.

In der Praxis wird der Regler 12 derart betrieben, dass in dem Backraum 10 während des Backens bei dem hier beschriebenen Umluftofen während des Betriebs des Gebläses möglichst fortwährend Umgebungsdruck herrscht. Dies führt zu dem gewünschten Backergebnis und dem gewünschten Volumen der Backwaren, da diese während des Backvorgangs nicht mit variierenden Drücken beaufschlagt werden und insbesondere am Ende des Backvorgangs der Druck nicht ansteigen und die Backwaren zusammendrücken kann.

Zum anderen reduziert sich durch die Regelung des Drucks in dem Backraum 10 auf den Umgebungsdruck die Störungsanfälligkeit des Backofens 1 selbst. Durch die kontinuierliche Beimischung von Umgebungsluft zur Backatmosphäre in einem geringen Umfang wird eine homogene Vermischung der Backatmosphäre in dem Backraum 10 erreicht. Sehr feuchte Bereiche in dem Backraum 10, die zur Kondensatbildung führen können, werden vermieden. Da Kondensat, das zu Störungen in der Elektronik oder auch zu Korrosion führen kann, verringert oder vermieden wird, wird die Störungsanfälligkeit reduziert.

Bei herkömmlichen Backöfen wird vor dem Montageraum mit der Druckleitung 11 und dem Antriebsmotor 6 ein Dunstfang montiert, der die aus dem Backraum 10 austretende feuchte Backatmosphäre auffängt. Ein derartiger Dunstfang kann bei dem hier beschriebenen Ofen entfallen. Die Backatmosphäre befindet sich auf Umgebungsdruck und weist am Ende des Backvorgangs keine übermäßig hohe Feuchtigkeit mehr auf, so dass ein teurer und aufwändiger Dunstfang entfallen kann.

### Bezugszeichenliste

- 1: Backofen
- 2: Tür
- 3: Austrittsöffnung
- 4: Deckwand
- 5: Frischluftöffnung
- 6: Antriebsmotor
- 7: Steuerungseinheit
- 8: Drucksensor
- 9: Röhrchen
- 10: Backraum
- 11: Druckleitung
- 12: Regler
- 13: Verschlussvorrichtung
- 14: unteres Ende

## Patentansprüche

1. Backofen (1) mit einem Backraum (10), welcher mit einer zu einem Kamin führenden Austrittsöffnung (3) versehen ist, durch die Luft aus dem Backraum (10) entweichen kann, und welcher eine Frischluftöffnung (5) mit motorisch verstellbarem Strömungsquerschnitt zwischen dem Backraum (10) und der Umgebung aufweist, wobei der Backofen einen Drucksensor (8) aufweist, der den Druck in dem Backraum (10) misst, wobei der Drucksensor (8) ein Differenzdrucksensor ist, der den Druckunterschied zwischen dem Backraumdruck und dem Umgebungsdruck misst und wobei der Drucksensor (8) die Messsignale an eine Steuereinheit (7) leitet, welche den verstellbaren Strömungsquerschnitt der Frischluftöffnung (5) aufgrund der Messsignale des Drucksensors (8) steuert, **dadurch gekennzeichnet, dass** die Steuereinheit dazu eingerichtet, den Öffnungsgrad des Strömungsquerschnitts der Frischluftöffnung (5) derart zu steuern, dass in dem Backraum (10) während des Backvorgangs Umgebungsdruck herrscht und gehalten wird.

2. Backofen (1) nach Anspruch 1, **dadurch gekennzeichnet, dass** der verstellbare Strömungsquerschnitt mindestens eine der folgenden Vorrichtungen aufweist:
• eine auf und zu schwenkbare Frischluftklappe;
• einen Schieber, der den Strömungsquerschnitt öffnet oder schließt.

3. Backofen (1) nach Anspruch 1 oder 2, **dadurch gekennzeichnet, dass** der Drucksensor (8) außerhalb des Backraums (10) angeordnet ist und dass eine in dem Backraum (10) mündende Druckleitung (11) den Drucksensor (8) mit Backraumdruck beaufschlagt.

4. Backofen (1) nach einem der vorangehenden Ansprüche, **dadurch gekennzeichnet, dass** der Bereich oberhalb der Türöffnung frei von einem Dunstfang ist.

5. Verfahren zum Betrieb eines Backofens (1) nach einem der vorangehenden Ansprüche mit einem Backraum (10), welcher mit einer zu einem Kamin führenden Austrittsöffnung (3) versehen ist, durch die Luft aus dem Backraum (10) entweichen kann, und welcher eine Frischluftöffnung (5) mit motorisch verstellbarem Strömungsquerschnitt zwischen dem Backraum (10) und der Umgebung aufweist, **gekennzeichnet durch** folgende Schritte:
• ein Drucksensor (8), wobei der Drucksensor (8) ein Differenzdrucksensor ist, misst den Druckunterschied zwischen dem Backraumdruck und dem Umgebungsdruck ,
• die Messsignale des Drucksensors (8) werden an eine Steuereinheit (7) geleitet
• die Steuereinheit (7) steuert den Öffnungsgrad des verstellbaren Strömungsquerschnitts aufgrund der Messsignale des Drucksensors (8) und
• die Steuereinheit (7) steuert den Öffnungsgrad derart, dass in dem Backraum (10) während des Backvorgangs Umgebungsdruck herrscht und gehalten wird.

6. Verfahren nach Anspruch 5, **dadurch gekennzeichnet, dass** der Drucksensor (8) außerhalb des Backraums (10) angeordnet wird und dass eine in dem Backraum (10) mündende Strömungsleitung (11) den Drucksensor (8) mit Backraumdruck beaufschlagt.

## Claims

1. Baking oven (1) having a baking chamber (10) which is provided with an outlet opening (3) leading to a flue, air being able to escape from the baking chamber (10) through said outlet opening (3), and which has a fresh air opening (5) with a motor-adjustable flow cross section between the baking chamber (10) and the surroundings, wherein a pressure sensor (8) measures the pressure in the baking chamber (10), the pressure sensor (8) being a differential pressure sensor which measures the pressure difference between the baking chamber pressure and the ambient pressure and the pressure sensor (8) passing the measurement signals to a control unit (7) which controls the adjustable flow cross section of the fresh air opening (5) on the basis of the measurement signals from the pressure sensor (8), **characterized in that** the control unit is settable such that ambient pressure prevails and is maintained in the baking chamber (10) during the baking operation.

2. Baking oven (1) according to claim 1, **characterized in that** the adjustable flow cross section has at least one of the following devices:
• a fresh air flap that is swingable open and closed;
• a slider which opens or closes the flow cross section.

3. Baking oven (1) according to claim 1 or 2, **characterized in that** the pressure sensor (8) is arranged outside the baking chamber (10), and **in that** a pressure line (11) that leads into the baking chamber (10) subjects the pressure sensor (8) to baking chamber pressure.

4. Baking oven (1) according to one of the preceding claims, **characterized in that** the region above the door opening does not have a vapor hood.

5. Method for operating a baking oven (1) having a baking chamber (10) which is provided with an outlet opening (3) leading to a flue, air being able to escape from the baking chamber (10) through said outlet opening (3), and which has a fresh air opening (5) with a motor-adjustable flow cross section between the baking chamber (10) and the surroundings, **characterized by** the following steps:
• a pressure sensor (8) being a differential pressure sensor measures the pressure difference between the baking chamber pressure and the ambient,
• the measurement signals from the pressure sensor (8) are passed to a control unit (7),
• the control unit (7) controls the degree of opening of the adjustable flow cross section on the basis of the measurement signals from the pressure sensor (8), and
• the control unit (7) controls the degree of opening such that ambient pressure prevails and is maintained in the baking chamber (10) during the baking operation.

6. Method according to claim 6, **characterized in that** the pressure sensor (8) is arranged outside the baking chamber (10), and **in that** a flow line (11) that leads into the baking chamber (10) subjects the pressure sensor (8) to baking chamber pressure.

## Revendications

1. Four de cuisson (1) à chambre de cuisson (10), muni d'une ouverture de sortie (3) qui mène à une cheminée et à travers laquelle de l'air peut s'échapper de la chambre de cuisson (10), et présentant une ouverture d'air frais (5) à section transversale d'écoulement réglable de manière motorisée entre la chambre de cuisson (10) et l'environnement, le four de cuisson présentant un capteur de pression (8) qui mesure la pression au sein de la chambre de cuisson (10), le capteur de pression (8) étant un capteur de pression différentielle qui mesure la différence de pression entre la pression de la chambre de cuisson et la pression ambiante, le capteur de pression (8) transmettant les signaux de mesure à une unité de commande (7) qui commande la section transversale d'écoulement réglable de l'ouverture d'air frais (5) en se basant sur les signaux de mesure du capteur de pression (8), **caractérisé en ce que** l'unité de commande est conçue pour commander le degré d'ouverture de la section transversale d'écoulement de l'ouverture d'air frais (5) de telle manière que la pression ambiante règne et est maintenue dans la chambre de cuisson (10) pendant l'opération de cuisson.

2. Four de cuisson (1) selon la revendication 1, **caractérisé en ce que** la section transversale d'écoulement réglable présente au moins un des dispositifs suivants :
• un volet d'air frais pivotant pouvant s'ouvrir et se fermer ;
• une vanne qui ouvre ou ferme la section transversale d'écoulement.

3. Four de cuisson (1) selon la revendication 1 ou 2, **caractérisé en ce que** le capteur de pression (8) est agencé à l'extérieur de la chambre de cuisson (10) et **en ce qu'**une conduite de pression (11) débouchant dans la chambre de cuisson (10) soumet le capteur de pression (8) à une pression de chambre de cuisson.

4. Four de cuisson (1) selon l'une quelconque des revendications précédentes, **caractérisé en ce que** la région située au-dessus de l'ouverture de porte est exempte de hotte.

5. Procédé de fonctionnement d'un four de cuisson (1) selon l'une quelconque des revendications précédentes comprenant une chambre de cuisson (10), muni d'une ouverture de sortie (3) menant à une cheminée et à travers laquelle de l'air peut s'échapper de la chambre de cuisson (10), et présentant une ouverture d'air frais (5) à section transversale d'écoulement réglable de manière motorisée entre la chambre de cuisson (10) et l'environnement, **caractérisé par** les étapes suivantes :
• un capteur de pression (8) mesure la différence de pression entre la pression de chambre de cuisson et la pression ambiante, le capteur de pression (8) étant un capteur de pression différentielle,
• les signaux de mesure du capteur de pression (8) sont transmis à une unité de commande (7)
• l'unité de commande (7) commande le degré d'ouverture de la section transversale d'écoulement réglable en se basant sur les signaux de mesure du capteur de pression (8) et
• l'unité de commande (7) commande le degré d'ouverture de telle manière que la pression ambiante règne et est maintenue dans la chambre de cuisson (10) pendant l'opération de cuisson.

6. Procédé selon la revendication 5, **caractérisé en ce que** le capteur de pression (8) est agencé à l'extérieur de la chambre de cuisson (10) et **en ce qu'**une conduite d'écoulement (11) débouchant dans la chambre de cuisson (10) soumet le capteur de pression (8) à une pression de chambre de cuisson.
